# EUROPÄISCHE PATENTSCHRIFT

(11) **EP 0 616 181 B1**
(45) Veröffentlichungstag und Bekanntmachung des Hinweises auf die Patenterteilung: **25.09.1996**
(21) Anmeldenummer: 93104342.6
(22) Anmeldetag: 17.03.1993
(51) Int. Cl.: F24J 2/40, E04F 13/02

(54) **Wärmedämmverbundsystem**
Thermal insulation compound system
Système composé pour isolation thermique

(43) Veröffentlichungstag der Anmeldung: 21.09.1994
(73) Patentinhaber: STO AKTIENGESELLSCHAFT, D-79778 Stühlingen (DE)
(72) Erfinder: Grochal, Peter, Dr., W-7890 Waldshut-Tiengen 1 (DE)
(74) Vertreter: Patentanwälte Leinweber & Zimmermann

(56) Entgegenhaltungen:
- EP-A- 0 333 145
- EP-A- 0 440 156
- DE-A- 3 522 078
- GB-A- 2 142 135
- US-A- 3 384 324
- US-A- 4 259 401
- US-A- 4 581 285

## Beschreibung

Die Erfindung bezieht sich auf ein Wärmedämmverbundsystem zur Festlegung an einer Gebäudewand, welches eine lichtabsorbierende Wandaußenfläche, ein zumindest teilweise lichtdurchlässiges Wärmedämmaterial und ggf. unter Zwischenschaltung einer lichtdurchlässigen Armierung außenseitig eine wetterbeständige, zumindest teilweise lichtdurchlässige Putzschicht mit einer Schichtdicke zwischen 0,5 und 6mm aus einem Füllstoffe in einem Umfang enthaltenden aushärtenden Bindemittel umfaßt, daß der Strahlungstransmissionsgrad bei senkrechter Einstrahlung über 20% liegt.

Bei einem bekannten Wärmedämmverbundsystem dieser Art (EP-A-0 333 145) hat sich die Tatsache als ungünstig herausgestellt, daß es bei starker Lichteinstrahlung und gleichzeitig hohen Außentemperaturen, wie sie insbesondere im Sommer auftreten, zu einer unerwünscht hohen Umsetzung der durch das System hindurch und auf die Gebäudewand auftreffenden Lichtenergie in Wärme und dementsprechend zu einem Temperaturanstieg im Gebäudeinneren kommt.

Es ist nun bereits bekannt (DE-OS 35 22 078), ein der temperaturabhängigen Lichtdurchlässigkeitssteuerung dienendes flüssiges Material einzusetzen, das mit Hilfe einer transparenten Raumbegrenzung in eine gebrauchsfähige Form übergeführt ist und dessen Lichtdurchlässigkeit bei Erreichen einer vorbestimmten Temperatur reversibel abnimmt. Das flüssige Material wird in diesem Fall in eine Raumbegrenzung bildende Bauelemente, wie Mehrfachscheiben, Kunststoffdoppelscheiben oder andere transparente Körper eingesetzt, genauer gesagt zwischen sie eingeschaltet und bildet mit Hilfe dieser Raumbegrenzungen automatische Schattierungseinrichtungen. Die Mehrfachscheiben, Kunststoffdoppelscheiben o. dgl., zwischen denen das Material eingeschlossen ist, bestimmen mit ihren Außenabmessungen die Größe der Einheit, d.h. des von ihnen gebildeten flachen Körpers. Mit Hilfe derartiger Körper läßt sich das Problem der Schattierungen von Glasflächen lösen, d.h. eine wirkungsvolle, möglichst automatisch arbeitende Schattierungseinrichtung herstellen, die die Ausnutzung des Sonnenlichts im Winter zu Heizzwecken ermöglicht, die jedoch im Sommer verhindert, daß eine zu starke Erwärmung durch die Sonnenstrahlung stattfindet. Auf die sonst üblichen kostspieligen schattenspendenden Rollos, mit deren Hilfe die durchtretende Lichtmenge steuerbar ist, kann deshalb verzichtet werden.

Als in baulicher Hinsicht nachteilig hat sich jedoch die Tatsache herausgestellt, daß die von diesen herkömmlichen Einheiten gebildeten Körper sehr sperrig und unhandlich sind. Die Verarbeitung derartiger vorgefertigter transparenter Körper ist deshalb nicht nur schwierig und kostspielig, da es einer genauen architektonischen Planung bedarf, um die Körper an genau vorbestimmten Stellen in Bezug zueinander und in Bezug zu den sonstigen Bauelementen des zu erstellenden Gebäudes festlegen zu können. Diese Körper bestimmen vielmehr aufgrund ihrer durch die Scheiben geprägten glatten Außenflächen das Aussehen des fertigen Gebäudes entscheidend und zumeist sehr negativ. Von Nachteil in funktioneller Hinsicht ist ferner die Tatsache, daß das Licht durch die Scheiben hindurchtritt und erst in einem mehr oder weniger großen Abstand von diesen absorbiert wird. Die scheibenförmigen Körper lassen folglich die die Aufheizung in erster Linie bewirkende Infrarotstrahlung solange ungehindert hindurchtreten, bis die hinter diesen Körpern befindlichen Bereiche bereits überhitzt sind und durch Wärmeleitung von dort zu den Körpern schließlich für die erforderliche Verminderung der Transparenz gesorgt wird.

Es hat sich nun gezeigt, daß die fraglichen Nachteile bei einem Wärmedämmverbundsystem der eingangs genannten Art leicht auszuräumen sind, wenn erfindungsgemäß auf das Wärmedämmaterial mindestens eine Schicht mit einer Vielzahl in sie eingelagerter Hohlkörper bzw. Mikrohohlkörper aufgebracht ist, die eine transparente Raumbegrenzung für ein Material bilden, dessen Lichtdurchlässigkeit bei Überschreiten einer vorbestimmten Temperatur reversibel abnimmt. Die fragliche Schicht kann als Zusatzschicht zwischen dem Wärmedämmaterial und der äußeren Putzschicht angeordnet sein. Als besonders zweckmäßig hat es sich jedoch erwiesen, wenn die Schicht mit den das Licht steuernde Material enthaltenden eingelagerten Hohlkörpern bzw. Mikrohohlkörpern durch die Putzschicht gebildet ist. In diesem Fall bilden die das wirksame Material enthaltenden Hohlkörper bzw. Mikrohohlkörper nämlich Füllkörper, die sich als sogenannte Extender einem Putz beimischen lassen, der unmittelbar auf eine Gebäudewand oder aber eine auf letzterer festgelegte lichtdurchlässige Wärmedämmaterialschicht aufgetragen wird. In diesem Putz können sie ihre Lichtmengensteuerung nämlich voll entfalten, ohne daß durch sie der Charakter des Putzes beeinträchtigt wird.

Die Hohlkörper sind vorzugsweise kugelig; sie können jedoch auch eine von der Kugelform abweichende, beispielsweise längliche bzw. ovale Form besitzen.

Die in die zusätzliche Schicht bzw. in die Putzschicht einzulagernden, das aktive Material einschließenden Hohlkörper können aus Licht-, vorzugsweise Infrarotstrahlung besonders effektiv absorbierendem Kunststoff bestehen. Derartiger Kunststoff wird durch das einfallende Licht folglich einer besonders schnellen unmittelbaren Temperaturerhöhung unterworfen, die sehr rasch zu der angestrebten Transparenzverminderung führt. Als besonders vorteilhaft hat sich jedoch die Herstellung der Hohlkörper aus Glas erwiesen, da dieses eine im Vergleich zu den meisten infragekommenden Kunststoffen eine hohe Abriebfestigkeit besitzt, die vor allem dann zu besonderen Vorteilen führt, wenn die Hohlkörper aus Glas mit Hilfe von Rührorganen unter die übrigen üblicherweise einen Putz bildenden Materialien gemischt werden. Kunststoffhohlkörper könnten den Abriebbeanspruchungen durch die Rührorgane, insbesondere bei sehr klein dimensionierten Hohlkörpern in Form von Mikrokapseln, wie sie in der Praxis seit Jahrzehnten zum Umhüllen von chemischen Wirkstoffen bekannt sind und beispielsweise zum Einkapseln von tintenartigen Flüssigkeiten in Formularsatzpapieren Anwendung finden, nicht standhalten. Glas ist deshalb wesentlich widerstandsfester. Ein weiterer erheblicher Vorteil des Einsatzes von Glas zur Herstellung von Umhüllungen für den Einschluß von die Lichtdurchlässigkeit steuerndem Material besteht darin, daß die Eigenschaften des Putzes im Falle eines Brandes wesentlich verbessert werden, da sich einerseits das Glas völlig brandneutral verhält und überdies das umschlossene Material im Falle einer Freigabe zur Löschung eines Brandes beiträgt. Aus diesem Grunde eignet sich der die erfindungsgemäßen lichtdurchlässigkeitssteuernden Hohlkörper enthaltende Putz in besonderem Maße für die Schaffung der Außenbeschichtung einer brandgesicherten transparenten Wärmedämmung.

Als aktives Material können die verschiedensten Stoffe Anwendung finden. Zahlreiche Beispiele für Körper mit reversibel temperaturabhängiger Transparenz sind den DE OSn 27 38 253 und 3 213 092 entnehmbar. Die in der eingangs erwähnten DE-OS 35 22 078 offenbarten Stoffe sind mit dem Vorteil verbunden, daß sie einfach durch Änderung der Mengenverhältnisse in breiterem Maß eine Einstellung der Umschlagtemperatur erlauben. Die zum Zweck der Lichtdurchlässigkeitssteuerung Einsatz findenden Materialien enthalten deshalb beispielsweise 2,5 bis 40 Gew.-% Polyätherverbindung mit Äthylenoxidgruppen, 0 bis 25 Gew.-% Netzmittel, das 5 bis 10 Äthylenoxidgruppen im Molekül enthält, 2,5 bis 22,5 Gew.-% eines mit Wasser mischbaren Lösungsmittels, 0,1 bis 2 Gew.-% Carboxyvinylpolymeres, 0,05 bis 2 Gew.-% Base, 50 bis 60 Gew.-% Wasser und ggf. bis 2 Gew.-% übliche Zusatzstoffe.

Bei Herstellung von Wärmedämmverbundsystemen nach der Erfindung lassen sich die der Lichtdurchgangssteuerung dienenden Hohlkörper als sogenannte Extender in eine putzartige Masse einmischen, und es besteht keine Gefahr einer Beeinträchtigung der herkömmlichen freien, d.h. beliebigen architektonischen Gestaltung. Selbst dann wenn die Hohlkörper so groß bemessen werden, daß sie für einen relativ grobkörnigen Putz gut geeignet sind, erfüllen sie ihre Funktion sogar in doppelter Hinsicht; ihre Einlagerung in den Putz begünstigt nämlich die Putzstruktur. Letztere ist ebensowenig wie die architektonische Gestaltung an die Geometrie gebunden. Der Putz läßt sich wie ein Putz mit herkömmlichen Extendern verarbeiten. Durch die Einlagerung derartiger Extender mit einstellbarem Brechungsindex in die übrigen Füllstoffe einer z.B. auf eine Gebäudewand auftragbaren wetterbeständigen Deckschicht mit putzartigem Charakter wird somit sichergestellt, daß die Hohlkörper dieser Einheiten mit reversibler Transparenz durch unmittelbare Erwärmung aufgrund der einfallenden Strahlung sehr schnell eine direkte Transparenzsteuerung und damit letztlich die gewünschte Lichtmengen- bzw. Temperatursteuerung gewährleisten. Die Festlegung erfolgt mit geeigneten, mehr oder weniger transparenten Bindemitteln, vorzugsweise Kunstharzen in Form einer Dispersion oder einer Lösung. Dabei umfaßt das Putzschichtmaterial Polyacrylate, Polymethacrylate, deren Copolymere, Styrol-, Äthylen-, Vinylacetat- bzw. Fluoräthylencopolymere, Siliconharze, Polycarbonate, Epoxide bzw. Polyurethane. Als Bindemittel für das wetterfeste Putzschichtmaterial, das die Extender mit reversibler Transparenz enthält, kommen insbesondere anorganische Bindemittel, insbesondere Wasserglas in Frage.

Anhand der Zeichnung ist die Erfindung näher erläutert. Es zeigen
- Fig. 1: eine schematische Schnittansicht eines Wärmedämmverbundsystems zur Veranschaulichung des charakteristischen Temperaturverlaufs und
- Fig. 2: ein Diagramm zur Veranschaulichung des zeitabhängigen Temperaturverlaufs in verschiedenen Bereichen des Wärmedämmverbundsystems nach Fig. 1.

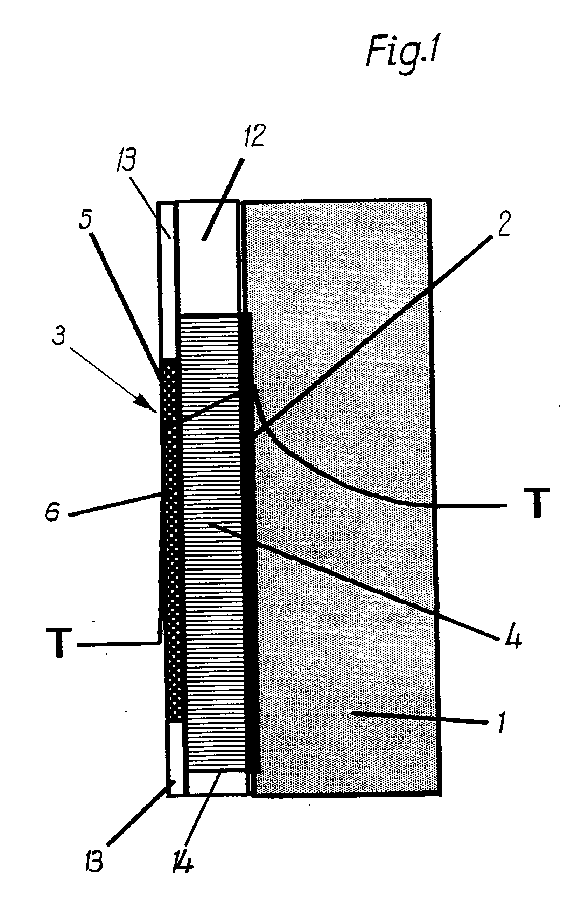

Wie Fig. 1 zeigt, ist auf eine Gebäudewand 1 mit einer lichtabsorbierenden Wandaußenfläche 2 ein Wärmedämmverbundsystem 3 festgelegt. Dieses umfaßt ein zumindest teilweise lichtdurchlässiges Wärmedämmaterial 4, das außenseitig gegen Witterungseinwirkungen geschützt ist. Zu diesem Zweck ist das Wärmedämmaterial 4 mit einer wetterbeständigen Putzschicht 5 aus einem zumindest teilweise lichtdurchlässige Füllstoffe in einem solchen Umfang enthaltenden aushärtenden Bindemittel versehen, daß der Strahlungstransmissionsgrad des Sonnenlichtes bei senkrechter Einstrahlung und Schichtdicken zwischen 0,5 mm und 6 mm über 20 % liegt. Zwischen der lichtdurchlässigen Putzschicht 5 und dem Wärmedämmaterial 4 ist eine lichtdurchlässige Armierung 6 angeordnet, die durch eine Schicht lichtdurchlässiger Spachtelmasse mit eingelagertem Glas- und/oder Kunststoffgewebe gebildet ist. Das Wärmedämmaterial 4 kann mittels einer Klebstoffschicht unmittelbar an der Wand 1, genauer an dessen Außenfläche 2 festgelegt sein. Diese Festlegung des Wärmedämmaterials 4 ist besonders leicht ausführbar, wenn es in Form von Wärmedämmplatten ausgebildet ist. Die Wärmedämmplatten sind zweckmäßigerweise als kapillare Platten ausgebildet, d.h. aus einer Vielzahl von aneinanderliegenden, untereinander verbundenen Kunststoffröhrchen mit einem Innendurchmesser von 1 bis 3,5 mm, vorzugsweise 2,5 mm, die quer zur Plattenebene, d.h. in Lichtdurchtrittsrichtung ausgerichtet sind. Die Verbindung dieser Röhrchen erfolgt zum Beispiel im Zuge der Ablängung mittels eines Heizdrahtes, d.h. jeweils im Bereich der sich in den Ebenen der Plattenaußenflächen befindenden Röhrchenenden. Beim Auftragen der Putzschicht 5 unmittelbar vor der Armierung 6 dringt das Material ein wenig in die Kapillaröffnungen ein und trägt in abgebundenem Zustand zu einem gegenseitigen Halt der Röhrchenenden bei. Bei unmittelbarer Festlegung der Wärmedämmplatten an der Gebäudewand 1 wird eine Klebstoffschicht benutzt, die dann gleichzeitig die lichtabsorbierende Wandaußenfläche 2 bilden kann.

Der Zeichnung ist ferner entnehmbar, daß sich das lichtdurchlässige Wärmedämmaterial 4 unmittelbar an ein an der Gebäudewand 1 festgelegtes opakes Wärmedämmaterial 12 aus Polystyrol anschließt, und zwar derart, daß das Wärmedämmverbundsystem einen zumindest teilweise lichtdurchlässigen Bereich und einen lichtundurchlässigen Bereich umfaßt. Sowohl das opake Wärmedämmaterial 12 als auch das lichtdurchlässige Wärmedämmaterial 4 sind an der Gebäudewand 1 festgelegt. Zur Schaffung einer fugenlosen Verbindung der opaken Wärmedämmplatten 12 mit den lichtdurchlässigen Wärmedämmplatten 4 ist die die opaken Platten abdeckende Armierung 13 über die Plattenstöße 14 zwischen den opaken und den lichtdurchlässigen Wärmedämmplatten hinwegreichend bis auf die Randzone der lichtdurchlässigen Platten 4 aufgetragen. An diese Armierung schließt sich die die lichtdurchlässigen Wärmedämmplatten 4 abdeckende lichtdurchlässige Armierung 6 unmittelbar bündig an. Es ist möglich, ein und dieselbe wetterbeständige Putzschicht 5 zur Abdeckung sowohl des opaken Wärmedämmaterials 12 als auch des lichtdurchlässigen Wärmedämmaterials 4, ggf. über die Armierung 6 zu verwenden.

Das Material, aus dem die Putzschicht 5 besteht, kann zu einem wesentlichen teil Acrylatdispersion umfassen, sowie Lösemittel, Entschäumer, Verdickungsmittel und Konservierungsmittel. In das Putzschichtmaterial mit dieser Bindemittelkomponente sind erfindungsgemäß die Hohlkörper bzw. Mikrohohlkörper mit dem in sie eingelagerten Lichtdurchlässigkeitssteuerungsmaterial eingebettet.

Wie weiter aus Fig. 1 ersichtlich, sorgt die spezielle Putzschicht 5 dafür, daß das auftreffende Licht, bevor es zur Wandaußenfläche 2 gelangt, bereits zu einer Aufwärmung führt. Dies zeigt der in die Figur eingezeichnete Kurvenverlauf T. Der schnelle Temperaturanstieg ist mit einer entsprechend frühen Verminderung der Lichtdurchlässigkeit durch die in den Putz eingelagerten Hohlkörper verbunden, wodurch entsprechend schnell ein übermäßiger Temperaturanstieg im Bereich der Wandaußenfläche 2 verhindert ist. Wie der Verlauf von T zeigt, ist von der Putzschicht 5 ausgehend nur ein relativ geringer Anstieg zur Wandaußenfläche 2 gegeben. Von dort fällt die Temperaturkurve T zur Wandinnenseite hin ab.

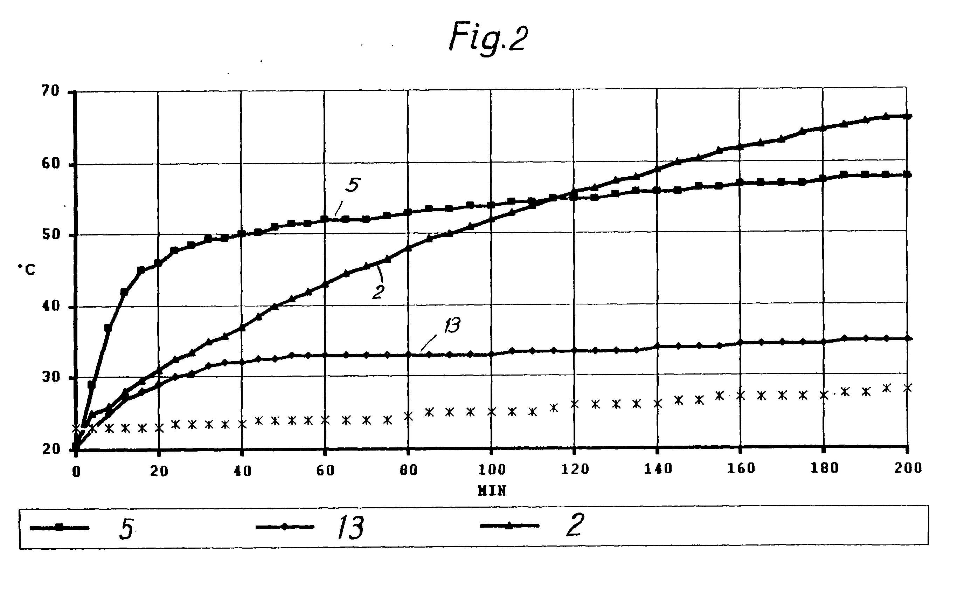

Fig. 2 zeigt den typischen zeitabhängigen Temperaturverlauf für das Wärmedämmverbundsystem nach Fig. 1 bei einer Lichteinstrahlung von ca. 800 W/m² und Raumtemperatur. Es zeigt sich, daß die Erwärmung des transparenten Putzes - Kurve 5 - überraschenderweise sehr schnell erfolgt, wogegen sich die Absorberschicht an der Außenfläche 2 der Gebäudewand 1 - Kurve 2 - erst langsam erwärmt. Der Zeitpunkt, zu dem die Kurve 2 die Kurve 5 schneidet hängt im Einzelfall vom Aufbau der Wand 1 ab. Eine Wand mit gut wärmeleitfähigem Baustoff erwärmt sich langsamer als eine Wand mit weniger gut leitfähigem Baustoff. Im dargestellten Fall dauert es ca. 111 Minuten, bis die Außenwand die gleiche Temperatur wie die Putzschicht erreicht hat. Die opake Putzschicht 13 - Kurve 13 erreicht, wie aus dieser Figur ebenfalls ersichtlich, nur einen vergleichsweise geringeren Temperaturwert, der auch über längere Zeit praktisch konstant bleibt.

Aus dieser Darstellung ist ersichtlich, daß sich die Putz- bzw. Armierungsschicht wesentlich schneller erwärmt bzw. abkühlt als die Außenfläche der Gebäudewand. Das erfindungsgemäße Wärmedämmverbundsystem ist daher zu einer Selbstregulierung besonders geeignet.

## Patentansprüche

1. Wärmedämmverbundsystem zur Festlegung an einer Gebäudewand (1), welches eine lichtabsorbierende Wandaußenfläche (2), ein zumindest teilweise lichtdurchlässiges Wärmedämmaterial (4) und ggf. unter Zwischenschaltung einer lichtdurchlässigen Armierung (6) außenseitig eine wetterbeständige, zumindest teilweise lichtdurchlässige Putzschicht (5) mit einer Schichtdicke zwischen 0,5 und 6mm aus einem Füllstoffe in einem Umfang enthaltenden aushärtenden Bindemittel umfaßt, daß der Strahlungstransmissionsgrad bei senkrechter Einstrahlung über 20% liegt, dadurch gekennzeichnet, daß auf das Wärmedämmaterial (4) mindestens eine Schicht (5) mit einer Vielzahl in sie eingelagerter Hohlkörper bzw. Mikrohohlkörper aufgebracht ist, die eine transparente Raumbegrenzung für ein Material bilden, dessen Lichtdurchlässigkeit bei Überschreiten einer vorbestimmten Temperatur reversibel abnimmt.

2. Wärmedämmverbundsystem nach Anspruch 1, dadurch gekennzeichnet, daß die Schicht mit den das Licht steuernde Material enthaltenden eingelagerten Hohlkörpern bzw. Mikrohohlkörpern durch die Putzschicht (5) gebildet ist.

3. Wärmedämmverbundsystem nach Anspruch 1 oder 2, dadurch gekennzeichnet, daß die Hohlkörper kugelig, länglich bzw. oval geformt sind.

4. Wärmedämmverbundsystem nach einem der vorstehenden Ansprüche, dadurch gekennzeichnet, daß die Hohlkörper aus Glas bestehen.

## Claims

1. Heat-insulation combination system for fixing to the wall of a building (1), comprising a light-absorbing wall outer surface (2), a heat-insulating material (4) which is at least partially transparent and, optionally with the insertion of a transparent reinforcement (6), on the outside a weather-resistant layer of plaster (5) which is at least partially transparent, has a layer thickness between 0.5 and 6 mm and comprises a curing binding agent containing fillers to the extent that the degree of radiation transmission with perpendicular irradiation lies above 20%, characterized in that there is applied to the heat-insulating material (4) at least one layer (5) with a plurality of hollow bodies or micro hollow bodies contained therein, which form a transparent space boundary for a material the transparency of which decreases in a reversible manner upon the exceeding of a predetermined temperature.

2. Heat-insulation combination system according to claim 1, characterized in that the layer with the contained hollow bodies or micro hollow bodies containing the light-controlling material is formed by the layer of plaster (5).

3. Heat-insulation combination system according to claim 1 or 2, characterized in that the hollow bodies are formed as spheres, oblongs or ovals.

4. Heat-insulation combination system according to one of the preceding claims, characterized in that the hollow bodies consist of glass.

## Revendications

1. Système composite d'isolation de la chaleur prévu pour fixation à un mur de bâtiment (1) et comprenant un matériau isolant thermique (4) au moins partiellement perméable à la lumière et, le cas échéant, en interposant une armature (6) perméable à la lumière et, extérieurement, une couche d'enduit (5), résistante aux intempéries, au moins partiellement perméable à la lumière, d'une épaisseur de couche comprise entre 0,5 et 6 mm, constituée d'un matériau de remplissage, entouré par un liant durcissant, de manière que le degré de transmission du rayonnement, en cas d'arrivée du rayonnement perpendiculaire, soit inférieur à 20 %, caractérisé en ce que, sur le matériau isolant thermique (4), est appliquée au moins une couche (5) avec une pluralité de corps creux ou de micro-corps creux insérés en elle, constituant une limitation spatiale transparente pour un matériau dont la transparence à la lumière diminue de façon réversible, en cas de dépassement d'une température prédéterminée.

2. Système composite d'isolation de la chaleur selon la revendication 1, caractérisé en ce que la couche présentant les corps creux ou les micro-corps creux introduits et contenant un matériau agissant sur la lumière est constituée par la couche d'enduit (5).

3. Système composite d'isolation de la chaleur selon la revendication 1 ou 2, caractérisé en ce que les corps creux sont de forme sphérique, allongée ou ovale.

4. Système composite d'isolation de la chaleur selon l'une des revendications précédentes, caractérisé en ce que les corps creux sont en verre.
